# EUROPEAN PATENT SPECIFICATION

(11) **EP 2 009 336 B1**
(45) Date of publication and mention of the grant of the patent: **01.09.2010**
(21) Application number: 08159315.4
(22) Date of filing: 30.06.2008
(51) Int. Cl.: F16K 17/196, B60P 3/22, B65D 90/34, F16K 24/04

(54) **Overflow device for a liquid container**
Überlaufvorrichtung für einen Flüssigkeitsbehälter
Dispositif de déversoir pour récipient de liquides

(30) Priority: 30.06.2007 DE 102007030554
(43) Date of publication of application: 31.12.2008
(73) Proprietor: Iveco Magirus AG, 89079 Ulm (DE)
(72) Inventor: Fitz, Harald, 77948 Friesenheim (DE)
(74) Representative: Borsano, Corrado

(56) References cited:
- DD-A1- 276 461
- GB-A- 1 130 099

## Description

The present invention pertains to an overflow device for a liquid container according to the preamble of claim 1.

Liquid containers such as tanks of fire-extinguishing vehicles are generally equipped with an overflow that is intended to prevent overfilling of the container and the build-up of undesired excess pressure in the container during the filling process.

Such an overflow device is presented in DD 276 461 A1. Around the fill line, which opens into the ceiling of the container, a free, ring-shaped open space remains that constitutes the actual overflow. It can be closed with a conical valve body, which is placed into the end of the fill lie in such a manner that it can be slid up and down. The valve body is pushed against the edge of the overflow as the valve seat by a coil spring on its underside. The coil spring in turn is supported on its underside by a basket, which is installed underneath the overflow at the container ceiling. The opening of the fill line is closed here by a diaphragm valve, which is centered within the valve body.

In the unpressurized condition of the fill line, the coil spring pushes the valve body upwards into its seat and closes the overflow so that no liquid can be spilled even during transport of the container. When the fill line is pressurized, the valve body is pushed downwards against the pressure of the coil spring towards the bottom of the basket, and the overflow is opened. Then, the diaphragm valve also opens, and the liquid can flow into the container while the overflow is open. Once the filling process is completed, the valve body returns into its seat through the pressure of the coil spring, and the container is closed again.

This construction is relatively elaborate and comprises a considerable number of individual components. In particular, the opening pressure of the diaphragm valve and the tension of the coil spring have to be coordinated in a manner that even in conditions of low fill pressure, the valve body is at first pushed against the spring tension towards the bottom of the basket before the diaphragm valve opens up so that the overflow is always open when the filling process is being started. To this end, the tension of the spring needs to be low. On the other hand, the spring has to be under enough tension in order to ensure the secure sealing of the overflow in the closed position. The spring tension thus always represents a compromise between these two requirements.

The task of the invention on hand is thus to create an overflow device of the above-mentioned kind which is constructed in a relatively simple manner and makes do with fewer components. In doing so, the previously mentioned problems in particular are to be avoided, which occur with the coordination of various elastic components.

This problem is solved according to the invention by means of an overflow device with the characteristics of claim 1.

According to the invention, the valve body comprises a chamber which has a bottom and a circumferential perimeter wall. With its upper circumferential edge, the wall circumscribes an opening into which the outlet of the fill line is placed. On the outside, an outer jacket is connected to the wall, which is designed to close the ring-shaped overflow opening. Underneath this outer jacket, at least one side opening is provided above the bottom of the chamber in the perimeter wall, connecting the interior of the chamber with the external space, i.e. the interior of the container. In the closed position, when the outer jacket of the valve body seals the overflow, the side opening is closed by an outer wall of the fill line which abuts the inner perimeter wall of the chamber.

This construction does not necessitate further components such as the diaphragm valve customary to the current state of technology in order to close the fill line. The fill line automatically opens through a downward movement of the valve body, because the side opening glides downwards beyond the lower edge of the fill line and is thus exposed. The liquid can then flow sideways towards the outside through the side opening into the container. In this manner, overflow and fill line can be simultaneously opened.

In addition to the fact that this solution requires fewer components, the coordination problems that occur with the usage of a diaphragm valve in combination with the coil spring for the valve body are also eliminated.

Advantageous configurations of the invention ensue from the subclaims.

In the following, a preferred configuration example of the invention is explained in more detail with the aid of the drawing.
- Figure 1: is a cross section through an embodiment of the overflow device according to the invention in the closed position; and
- Figure 2: shows the overflow device from figure 1 in the open position.

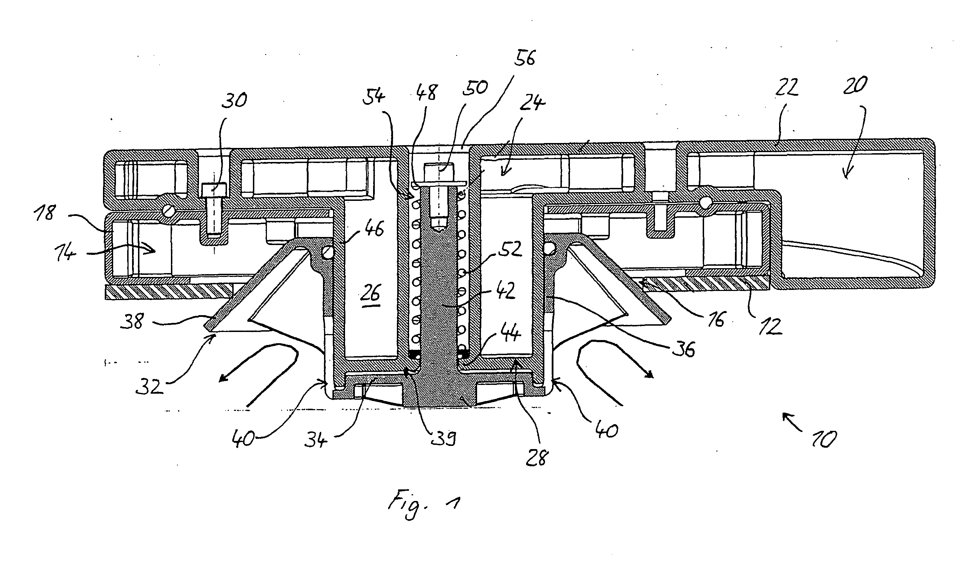

The overflow device 10 depicted in figure 1 is intended to be installed on a liquid container that is not further described. An approximately ring-shaped, flat gasket 12 of the device 10 serves as a base on the ceiling of the container. An overflow line 14 is placed on top of the gasket 12, through which a fluid from the container can drain through an overflow 16, which is constructed in the ceiling of the container or in the gasket 12, which rests thereupon. In figure 1, only a flat hollow body 18 is discernible of the overflow line 14, which serves the purpose of collecting the fluid that rises into the gasket 12 through the overflow 16 and to drain it through another section of the line that is not displayed and whose details are not relevant to the functionality of the invention on hand.

On top of the hollow body 18 of the overflow line 14 is another hollow body 22, which constitutes the end of the fill line 20. The hollow body 22 partially wraps around the outside of the hollow body 18 of the overflow line 14 and carries the fluid to be filled into the container to a central area 24 of the fill line 20 above the hollow body 18, from which a cylindrical final section 26 extends downwards through the hollow body 18 and through the gasket 12 as well as through the container ceiling. The actual outlet 28, i.e. the end of the fill line 20 is located at the lower end of this final section 26, and the liquid can flow into the container from this outlet 28. A ring-shaped open space remains around the final section 26 of the fill line 20, forming the overflow 16.

The final section 26, together with the other displayed parts of the fill line 20, is manufactured in one piece and out of plastic, as is the hollow body 18 of the overflow line 14. The parts of the two hollow bodies 18 and 22 that are overlapping could for example be attached on top of each other by means of screws 30.

A valve body 32, which sits on the final section 26 of the fill line 20, serves the purpose of closing the overflow 16 and the outlet 28 of the fill line 20. To this end, the valve body 32 encompasses an approximately disk-shaped closed bottom 34, a cylindrical perimeter wall 36 that extends upwards from the edge of the bottom 34, and a truncated cone-shaped outer jacket 38, which originates from the upper edge of the perimeter wall 36. The bottom 34 and the perimeter wall 36 delimitate a chamber 39, which is open at its upper end. This opening, which is demarcated by the upper edge of the perimeter wall 36, accommodates the final section 26 of the fill line 20. The valve body 32 is arranged in such a manner that it can be slid upwards and downwards on the final section 26 of the fill line 20 and that it strikes against the edge of the overflow 16 with its outer jacket 38 in its upper end-stop position.

In this position, the overflow 16 is closed. When the valve body 32 is slid downwards in an axial direction on the final section 26 of the fill line 20, the overflow 16 is opened as a ring-shaped interspace between the outer jacket 38 and the inner edge of the opening of gasket 12, and a fluid can flow in through this overflow 16 into the overflow line 14. During this sliding motion, the interior side of the perimeter wall 36 glides on the exterior side of the cylindrical outer wall 46 of the final section 26 of the fill line 20.

In the perimeter wall 36, openings 40 are arranged above the bottom 34 underneath the outer jacket 38. In the closed position of the valve body 32, as displayed in figure 1, the bottom 34 of the valve body 32 directly abuts the outlet 28 of the fill line 20, and the openings 40 are covered internally through the outer wall 46 of the final section 26 of the fill line 20. When the valve body 32 is slid downwards, the openings 40 are gliding over the lower edge of the outer wall 46 and are opening a fluid connection between the outlet 28 of the fill line 20 and the interior space of the container. The fluid can then freely flow from the outlet 28; at first in a radial direction towards the outside over the bottom 34 to the openings 40 and through these into the container. The valve body 32 is designed in such a manner that the overflow 16 as well as the outlet 28 of the fill line 20 are closed in the upper end-stop position displayed in figure 1. A downward gliding motion of the valve body 32 simultaneously opens the fill line 20 and the overflow 16.

In the final section 26 of the fill line 20, the valve body 32 is held by a shaft 42 that extends from the bottom 34 of the chamber of the valve body 32 upwards into an entrance area 44 in the outlet 28 of the fill line 20. This entrance area 44 is an opening that tightly surrounds the shaft 42 of the valve body 32. For example, the entrance area could be configured as a ring that is connected with the cylindrical wall 46 of the final section 26 of the fill line 20 by means of struts that radially extend from the ring, thus centering the shaft 42 within the outlet 28.

The upper end of the shaft 42 is radially expanded by means of a washer 48, which is firmly screwed onto the upper shaft end by means of a screw 50, whose thread axially extends into the shaft 42. A coil spring 52 lies between this upper expanded shaft end 42 and the entrance area 44, which coils around the shaft 42 and is fitted onto it.

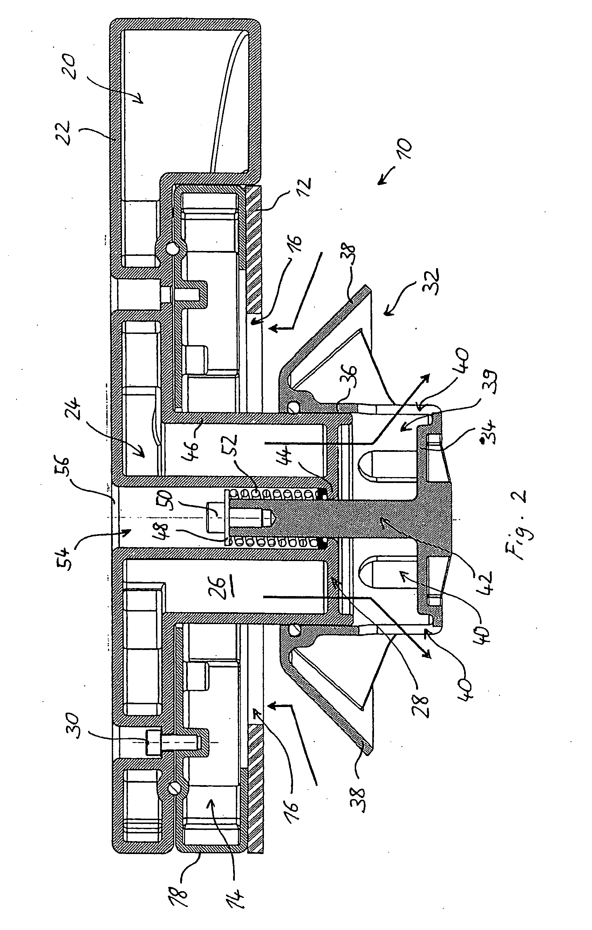

Figure 1 shows the coil spring 52 in the expanded position, in which its tension pushes the valve body 32 upwards to close the overflow 16 and the outlet 28 of the fill line 20. Pressure within the fill line 20 pushes the bottom 34 of the valve body 32 downwards, as is shown in figure 2, and the spring 52 is compressed. This also clears the openings 40 in the perimeter wall 36 of the valve body 32, and the fluid can flow into the container from the outlet 28, as previously described. When the pressure in the fill line 20 subsides, the spring 52 automatically pushes the valve body back up. The valve body thus serves the function of a unidirectional restrictor valve which prevents fluid from flowing back into the fill line 20.

From the entrance area 44 at the outlet 28 of the fill line 20, a canal 54 extends vertically upwards within the final section 26, which is open towards the surrounding area and closed towards the interior of the fill line 20. The shaft 42 with the spring coil 52 is positioned in this canal 54. The screw 50 is accessible through the upper opening 56 of the canal 54 for the fixation of the washer 48.

The rotation-symmetrical valve body 32 can freely rotate on the cylindrical final section 26 of the fill line 20. The openings 40 in the perimeter wall 36 of the chamber can be configured in such a manner that the flow of the fluid from the outlet 28 is diverted radially towards the outside beyond the bottom 34 during the passage through the opening 40 in the direction of the perimeter. The resulting reaction force sets the valve body 32 in rotation. The rotation contributes to the prevention of residue build-up between the final section 26 of the fill line 20 and the valve body, which could cause leakage and interfere with the up and down motion of the valve body.

The overflow device 10 according to the invention offers the possibility to open the overflow 16 during the filling process of a container with relatively simple means. After the filling process is completed, the overflow 16 is automatically closed through the tension of the coil spring 52, because the inner edge of the opening of the gasket 12 forms a valve seat for the valve body 32, while the outlet 28 of the fill line 20 is simultaneously closed. This condition prevents the outpouring of fluid through the overflow towards the outside. This is of significance especially for mobile containers such as the water tanks of fire-extinguishing vehicles.

## Claims

1. Overflow device (10) for a liquid container with a fill line (20), whose outlet (28) extends into an opening in the ceiling of the container when in use with the liquid container, an overflow (16), which is formed by the ring-shaped opening area which remains around the fill line (20), and a valve body (32) for the opening and closing of the overflow (16), which is installed on the fill line (20) in such a manner that it can be axially slid, and is positioned in the respective direction for closing the overflow (16) by means of a tension element (52), **characterized by** the fact that there is a chamber in the valve body (32) with a closed bottom (34), a perimeter wall (36), and an opening that is demarcated by the upper edge of the perimeter wall (36), in which the outlet (28) of the fill line (20) is placed; and that the valve body (32) further comprises an outer jacket (38), which is adjacent to the exterior of the perimeter wall (36), for the purpose of closing the overflow (16), and that the perimeter wall (36) contains at least one opening (40) above the bottom (34) and underneath the outer jacket (38), which is closed by an outer wall (46) of the fill line (20) in the closed position of the overflow (16).

2. Filling device according to claim 1, **characterized by** the fact that the tension element (52) is constituted by a coil spring, which is arranged in an axial and concentric position towards the fill line (20).

3. Filling device according to claim 2, **characterized by** the fact that the valve body (32) surrounds a shaft (42), which extends from the bottom (34) of the chamber into an entrance area (44) at the end of the fill line (20), and that the spring coil (52) is fitted onto this shaft (42) and is placed between an expanded upper end of the shaft (42) as the upper end-stop and the entrance area (44) as the lower end-stop.

4. Filling device according to one of the previous claims, **characterized by** the fact that the valve body (32) is postitioned on the final section (26) of the fill line (20) in a such a manner that it can freely rotate and that the opening (40) in the perimeter wall (36) of the chamber is configured to deflect the flow trough the opening (40) towards the outside in the direction of the perimeter.

5. Filling device according to one of the previous claims, **characterized by** the fact that the outer jacket (38) is configured in a truncated cone shape.

## Patentansprüche

1. Überlauf-Vorrichtung (10) für einen Flüssigkeitsbehälter mit einer Befüllleitung (20), deren Auslass (28) sich in eine Öffnung in der Oberwand des Behälters erstreckt, wenn er in Verbindung mit dem Flüssigkeitsbehälter ist, einem Überlauf (16), der gebildet wird durch den ringförmigen Öffnungsbereich, der um die Befüllleitung (20) verbleibt, und einen Ventilkörper (32) zum Öffnen und Schließen des Überlaufs (16), der auf der Befüllleitung (20) in einer solchen Weise installiert ist, dass er in axialer Richtung verschoben werden kann und in der jeweiligen Richtung zum Schließen des Überlaufs (16) mittels eines Spannungselements (52) positioniert wird, **gekennzeichnet durch** die Tatsache, dass es eine Kammer in dem Ventilkörper (32) mit einem geschlossenen Boden (34), einer Umfangswand (36) und einer Öffnung gibt, die abgegrenzt wird durch die obere Kante der Umfangswand (36), in der der Auslass (28) der Befüllleitung (20) platziert ist, und dass der Ventilkörper (32) weiter einen Außenmantel (38) umfasst, der benachbart der Außenseite der Umfangswand (36) ist, zum Zweck eines Schließens des Überlaufs (16), und dass die Umfangswand (36) wenigstens eine Öffnung (40) oberhalb des Bodens (34) und unter dem Außenmantel (38) enthält, die **durch** eine Außenwand (46) der Befüllleitung (20) in der geschlossenen Position des Überlaufs (16) geschlossen wird.

2. Befüll-Vorrichtung nach Anspruch 1, **gekennzeichnet durch** die Tatsache, dass das Spannungselement (52) **durch** eine Spiralfeder gebildet wird, die in einer axialen und konzentrischen Position in Richtung auf die Befüllleitung (20) angeordnet ist.

3. Befüll-Vorrichtung nach Anspruch 2, **gekennzeichnet durch** die Tatsache, dass der Ventilkörper (32) einen Stiel (42) umgibt, der sich vom Boden (34) der Kammer in einen Eingangsbereich (44) am Ende der Befüllleitung (20) erstreckt, und dass die Spiralfeder (52) auf diesen Stiel (42) aufgelegt ist und zwischen einem expandierten oberen Ende des Stiels (42) als dem oberen Anschlag und dem Eingangsbereich (44) als den unteren Anschlag platziert ist.

4. Füll-Vorrichtung nach irgendeinem der vorangehenden Ansprüche, **gekennzeichnet durch** die Tatsache, dass der Ventilkörper (32) auf dem Endabschnitt (26) der Befüllleitung (20) in einer solchen Weise positioniert ist, dass er frei rotieren kann und, dass die Öffnung (40) in der Umfangswand (36) der Kammer so konfiguriert ist, dass sie den Strom **durch** die Öffnung (40) in Richtung auf die Außenseite in Richtung des Umfangs ableitet.

5. Füll-Vorrichtung nach einem der vorangehenden Ansprüche, **gekennzeichnet durch** die Tatsache, dass der Außenmantel (38) in Form eines Kegelstumpfs konfiguriert ist.

## Revendications

1. Dispositif de déversoir (10) pour un récipient de liquides avec une conduite de remplissage (20), dont la sortie (28) s'étend dans une ouverture au plafond du récipient en utilisation avec le récipient de liquides, un déversoir (16) qui est formé par la zone d'ouverture en forme d'anneau qui reste autour de la conduite de remplissage (20), et un corps de vanne (32) pour l'ouverture et la fermeture du déversoir (16), qui est installé sur la conduite de remplissage (20) de manière à pouvoir coulisser axialement, et est positionné dans la direction respective pour la fermeture du déversoir (16) au moyen d'un élément de tension (52), **caractérisé par le fait qu'**il y a une chambre dans le corps de vanne (32) avec un fond fermé (34), une paroi de périmètre (36), et une ouverture qui est démarquée par le bord supérieur de la paroi de périmètre (36), dans laquelle la sortie (28) de la conduite de remplissage (20) est placée ; et en ce que le corps de vanne (32) comprend une chemise extérieure (38) qui est adjacente à l'extérieur de la paroi de périmètre (36) dans le but de fermer le déversoir (16), et en ce que la paroi de périmètre (36) contient au moins une ouverture (40) au-dessus du fond (34) et au-dessous de la chemise extérieure (38), qui est fermée par une paroi extérieure (46) de la conduite de remplissage (20) à la position fermée du déversoir (16).

2. Dispositif de remplissage selon la revendication 1, **caractérisé par le fait que** l'élément de tension (52) est constitué d'un ressort hélicoïdal qui est agencé à une position concentrique axiale vers la conduite de remplissage (20).

3. Dispositif de remplissage selon la revendication 2, **caractérisé par le fait que** le corps de vanne (32) entoure un arbre (42) qui s'étend du fond (34) de la chambre dans une zone d'entrée (44) à l'extrémité de la conduite de remplissage (20), et en ce que le ressort hélicoïdal (52) est monté sur cet arbre (42) et est placé entre une extrémité supérieure étendue de l'arbre (42) en tant que butée supérieure et la zone d'entrée (44) en tant que butée inférieure.

4. Dispositif de remplissage selon l'une des revendications précédentes, **caractérisé par le fait que** le corps de vanne (32) est positionné sur la partie finale (26) de la conduite de remplissage (20) de manière à ce qu'il puisse tourner librement et en ce que l'ouverture (40) dans la paroi de périmètre (36) de la chambre est configurée pour détourner l'écoulement à travers l'ouverture (40) vers l'extérieur dans la direction du périmètre.

5. Dispositif de remplissage selon l'une des revendications précédentes, **caractérisé par le fait que** la chemise extérieure (38) est configurée dans une forme de cône tronqué.
